Europäisches Patentamt

European Patent Office

Office européen des brevets

(11) Veröffentlichungsnummer: **0 477 575 A1**

# EUROPÄISCHE PATENTANMELDUNG

(21) Anmeldenummer: **91114484.8**

(22) Anmeldetag: **28.08.91**

(51) Int. Cl.5: **G01F 1/66**, G01H 11/08, G10K 11/00, G01F 1/32

(30) Priorität: **25.09.90 DE 4030302**

(43) Veröffentlichungstag der Anmeldung:
**01.04.92 Patentblatt 92/14**

(84) Benannte Vertragsstaaten:
**AT BE CH DE DK FR GB IT LI NL SE**

(71) Anmelder: **SIEMENS AKTIENGESELLSCHAFT**
**Wittelsbacherplatz 2**

**W-8000 München 2(DE)**

(72) Erfinder: **Mágori, Valentin, Dipl.-Phys.**
**Limburgstrasse 17**
**W-8000 München 90(DE)**
Erfinder: **Habrich, Reiner, Dipl.-Phys.**
**Reiherweg 14**
**W-8011 Kirchheim(DE)**

(54) US-Wandler, insbesondere zur Luft- und Gasdurchflussmessung, und Verfahren zur Herstellung desselben.

(57) Ein Verfahren zur Herstellung eines US-Wandlers zur Luft- und Gasdurchflußmessung, das Schritte enthält zum Gießen eines Wandlerkerns (1/2) aus einem gießbaren Dämpfungsmaterial (D) in einer Kern-Form (F1), wobei der Wandlerkern (1/2) aus einer an einer Seite eines Dämpfungskörpers (2) in ihrer Dicke teilweise freiliegenden Piezokeramikscheibe (1) und dem Dämpfungskörper (2), in den die Piezokeramikscheibe (1) teilweise mit nach außen führbaren Anschlußleitungen (1a, 1b) eingeschlossen ist, besteht, und Umschließen des Wandlerkerns (1/2) mit einem gießbaren Anpaßmaterial in einer zweiteiligen Form zur Bildung eines Anpaß- und Montagekörpers.

FIG 1

HERSTELLUNG DES WANDLERKERNS

EP 0 477 575 A1

Die vorliegende Erfindung betrifft einen US-Wandler, insbesondere zur Luft- und Gasdurchflußmessung, und ein Verfahren zur Herstellung desselben.

Bisher bekannt gewordene Verfahren zur Herstellung derartiger US-Wandler sind von der Anzahl der Herstellungsschritte und/oder dem Aufwand von Herstellungsvorrichtungen her gesehen kosten- und zeitaufwendig.

Angesichts des ständig zunehmendem Bedarfs an kostengünstigen US-Wandlern besteht der Wunsch, ein Verfahren zur Herstellung derartiger US-Wandler zu schaffen, das sowohl von dem Zeitaufwand als auch von dem Vorrichtungsaufwand für den Herstellungsprozeß geringe Anforderungen stellt und damit die Möglichkeit bietet, kostengünstige US-Wandler herzustellen.

Der vorliegenden Erfindung liegt die Aufgabe zugrunde, ein Verfahren zur Herstellung eines US-Wandlers zur Schallabstrahlung und zum Schallempfang, z. B. zur Luft- und Gasdurchflußmessung anzugeben, mittels dessen in zuverlässiger Weise US-Wandler der eingangs genannten Art mit geringem Zeit- und/oder Vorrichtungsaufwand hergestellt werden können.

Zur Lösung der genannten Aufgabe wird ein Verfahren zur Herstellung eines US-Wandlers zur Luft- und Gasdurchflußmessung vorgeschlagen, das erfindungsgemäß dadurch gekennzeichnet ist, daß Schritte vorgesehen sind zum Gießen eines Wandlerkerns aus einem gießbaren Dämpfungsmaterial in einer Kern-Form, wobei der Wandlerkern aus einer an einer Seite eines Dämpfungskörpers in ihrer Dicke teilweise freiliegenden Piezokeramikscheibe und dem Dämpfungskörper, in den die Piezokeramikscheibe teilweise mit nach außen führbaren Anschlußleitungen angeschlossen wird, besteht, und Umschließen des Wandlerkerns mit einem gießbaren Anpaßmaterial in einer zweiteiligen Form zur Bildung eines Anpaß- und Montagekörpers.

Vorteilhafte Weiterbildungen der Erfindung sind durch die in den Unteransprüchen angegebenen Merkmale gekennzeichnet.

Im folgenden wird die Erfindung anhand mehrerer Figuren, die jeweils bevorzugte Ausführungsbeispiele betreffen, im einzelnen beschrieben.

Fig. 1 A, Fig. 1 B und Fig. 1 C
zeigen
schematisch die zur Herstellung eines Wandlerkerns benötigten Schritte.
Fig. 2 zeigt
eine schematische Schnittansicht, aus der ein Schritt zum Umschließen des gemäß Fig. 1 hergestellten Wandlerkerns mit einem gießbaren Anpaßmaterial A in einer zweiteiligen Form hervorgeht.
Fig. 3 zeigt eine schematische Darstellung eines Vorgangs zum Umschließen des gemäß Fig. 1 hergestelltem Wandlerkerns mit einem auswertbaren Anpaßmaterial gemäß einem zweiten Ausführungsbeispiel.
Fig. 4 zeigt
eine schematische Schnittansicht eines Wandlerkerns mit einem diesen umschließenden Töpfchen aus Anpaßmaterial, wobei verdrehsichernde Anschlußstifte vorgesehen sind, die von einer Piezokeramikscheibe des Wandlers radial aus dem Wandlerkern herausgeführt sind.
Fig. 5 zeigt
eine schematische Schnittansicht eines Wandlerkerns, der mit einem Töpfchen aus Anpaßmaterial versehen ist, wobei in dem Wandlerkern parallel zur Rotationsachse des Aufbaus ausgerichteter Anschlußstecker für die Piezokeramikscheibe des Wandlers vorgesehen sind.
Fig. 6 zeigt
eine schematische Schnittansicht mit zugehöriger Untersicht eines Ausführungsbeispiels eines Wandlerkerns mit einer Nut zur Verdrehsicherung desselben.

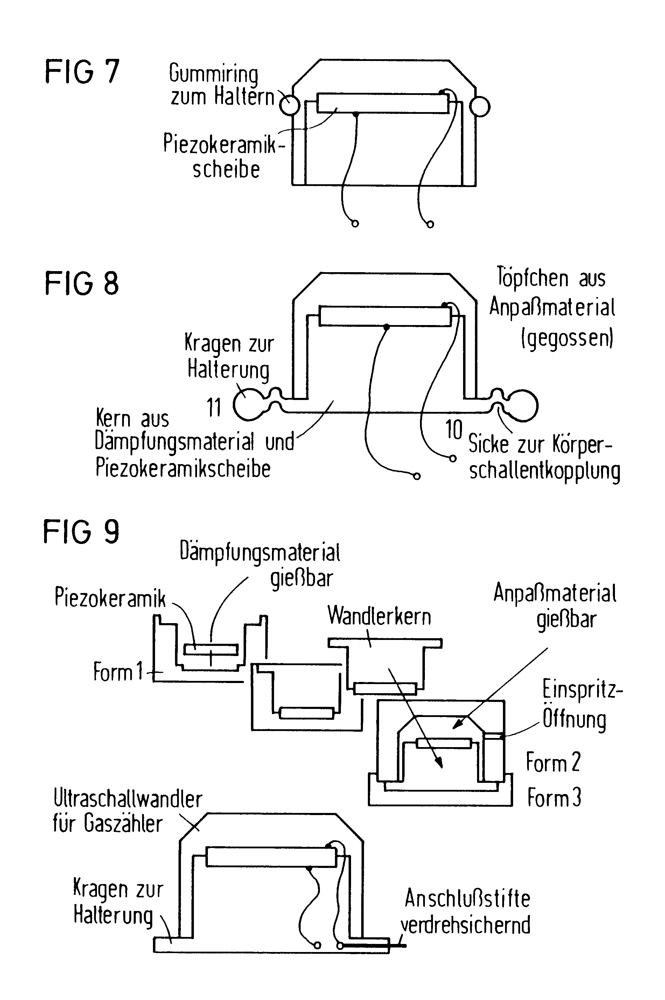

Fig. 7 zeigt
ein weiteres Ausführungsbeispiel des erfindungsgemäß hergestellten Wandlerkerns, wobei in einer Nut ein Gummiring zum Haltern des Wandlerkerns eingesetzt ist.
Fig. 8 zeigt
ein weiteres Ausführungsbeispiel eines erfindungsgemäß hergestellten Wandlerkerns, bei dem an einem Kragen des Dämpfungskörpers eine Sicke 10 zur Körperschallentkopplung mit einem sich daran anschließenden Randwulst 11 zur Halterung des Dämpfungskörpers ausgebildet ist.
Fig. 9 zeigt
schematisch die verschiedenen erfindungsgemäßen Herstellungsschritte zum Herstellen eines US-Wandlers und eine schematische Schnittansicht des Gesamtaufbaus eines durch diese Schritte hergestellten US-Wandlers, der als Gaszähler einsetzbar ist.

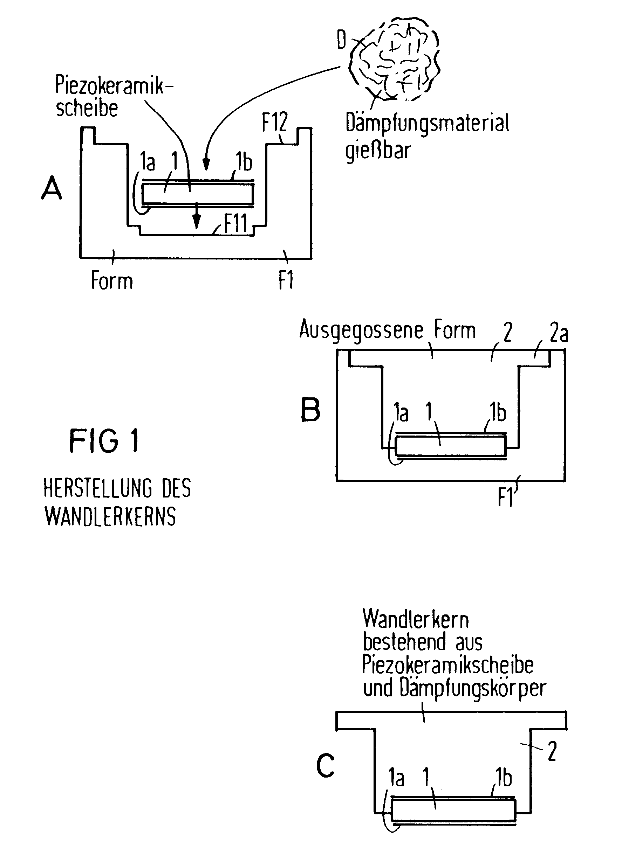

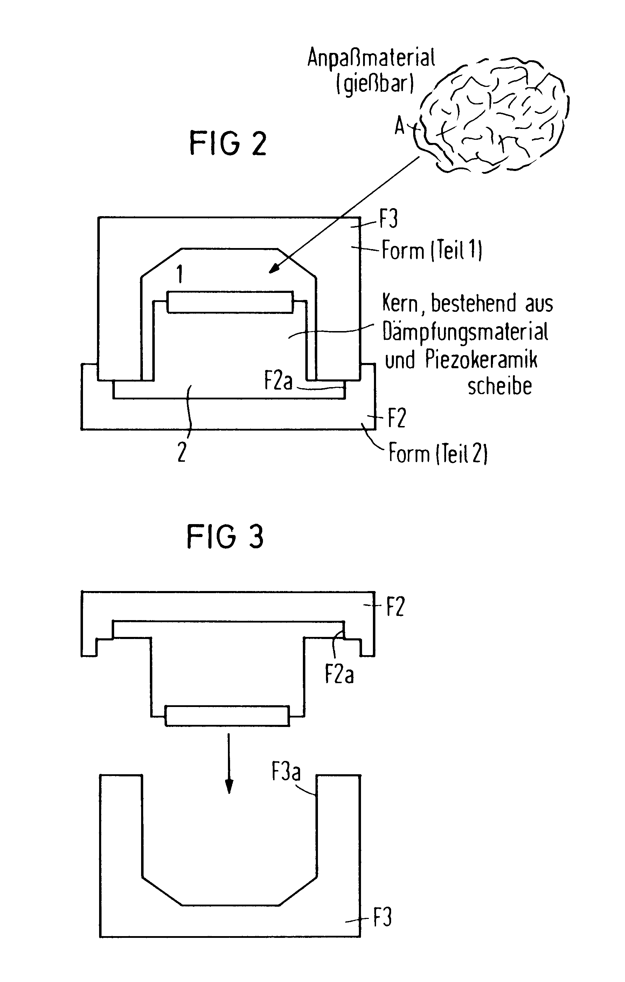

Wie bereits angegeben, Zeigt Fig. 1 schematisch die zur erfindungsgemäßen Herstellung eines Wandlerkerns benötigten Schritte. Zum Gießen eines Wandlerkerns wird die mit nach außen führbaren Anschlußleitungen (nicht gezeigt) versehene Piezokeramikscheibe 1 zur Bildung des Wandlerkerns 1/2 in eine Kern-Form F 1, die eine zur Aufnahme der Piezokeramikscheibe 1 bestimmte Ausnehmung F 11 aufweist, eingelegt. Anschließend wird Dämpfungsmaterial D in die Kern-Form F 1 gegossen, wobei die Kern-Form F 1 derart ausgebildet ist, daß der Dämpfungskörper 2 an seiner der Piezokeramikscheibe 1 abgewandten Seite mit einem Kragen 2 a ausgebildet wird. Der fertige, der KernForm F 1 entnommene Wandlerkern 1/2 wird mit seinem Kragen 2 a in einer Ausnehmung F 2 a eines ersten Formteils F 2 einer Form F 2/F 3 zur Bildung eines Anpaß- und Montagekörpers 3 eingesetzt, vergl. Fig. 2. In das erste Formteil F 2 wird ein zweites Formteil F 3 der Form F 2/F 3 zur Bildung eines Anpaß- und Montagekörpers 3 derart eingesetzt, daß der Kragen 2 a des Wandlerkerns 1/2 zumindest zum Teil einerseits von dem ersten Formteil F 2 und andererseits von dem zweiten Formteil F 3 eingeschlossen ist. Danach wird ein Anpaßmaterial A in die aus dem ersten Formteil F 2 und dem zweiten Formteil F 3 gebildete Form F 2/F 3 zur Bildung des Anpaß- und Montagekörpers 3 gespritzt, um den Anpaß- und Montagekörper 3 zu bilden, der den Wandlerkern 1/2 bis auf einen freiliegenden Teil des Kragens 2 a vollständig umschließt.

Ein weiteres bevorzugtes Verfahren gemäß einer Ausführungsform der Erfindung sieht vor, daß die mit nach außen führbaren Anschlußleitungen (nicht gezeigt) versehene Piezokeramikscheibe 1 zur Bildung des Wandlerkerns 1/2 in die Kern-Form F 1, die eine zur Aufnahme der Piezokeramikscheibe 1 bestimmte Ausnehmung F 11 aufweist, eingelegt wird. Anschließend wird Dämpfungsmaterial D in die Kern-Form F 1 gegossen, wobei die Kern-Form F 1 derart ausgebildet ist, daß der Dämpfungskörper 2 an seiner der Piezokeramikscheibe 1 abgewandten Seite mit einem Kragen 2 a ausgebildet wird. Der fertige, der Kern-Form F 1 entnommene Wandlerkern 1/2 wird mit seinem Kragen 2 a in eine Ausnehmung F 2 a eines ersten Formteils F 2 einer Form F 2/F 3 zur Bildung des Anpaß- und Montagekörpers 3 eingesetzt. Zur Bildung des Anpaß- und Montagekörpers 3 wird ein zweites Formteil F 3 der Form F 2/F 3 mit nach oben weisender, den Wandlerkern aufnehmenden Öffnung F 3 a teilweise mit Anpaßmaterial gefüllt. Anschließend wird das erste Formteil F 2 mit dem nach unten zu der Öffnung F 3 a des zweiten Formteils F 3 weisenden Wandlerkern 1/2 in die Öffnung F 3 a des zweiten Formteils F 3 bis zum Eingriff der beiden Formteile F 2/F 3 miteinander eingepreßt, so daß das in dem zweiten Formteil F 3 enthaltene Anpaßmaterial verdrängt wird und um den eintauchenden Wandlerkern 1/2 herum zur Bildung des Anpaß- und Montagekörpers 3 aufsteigt, vergl. Fig. 3.

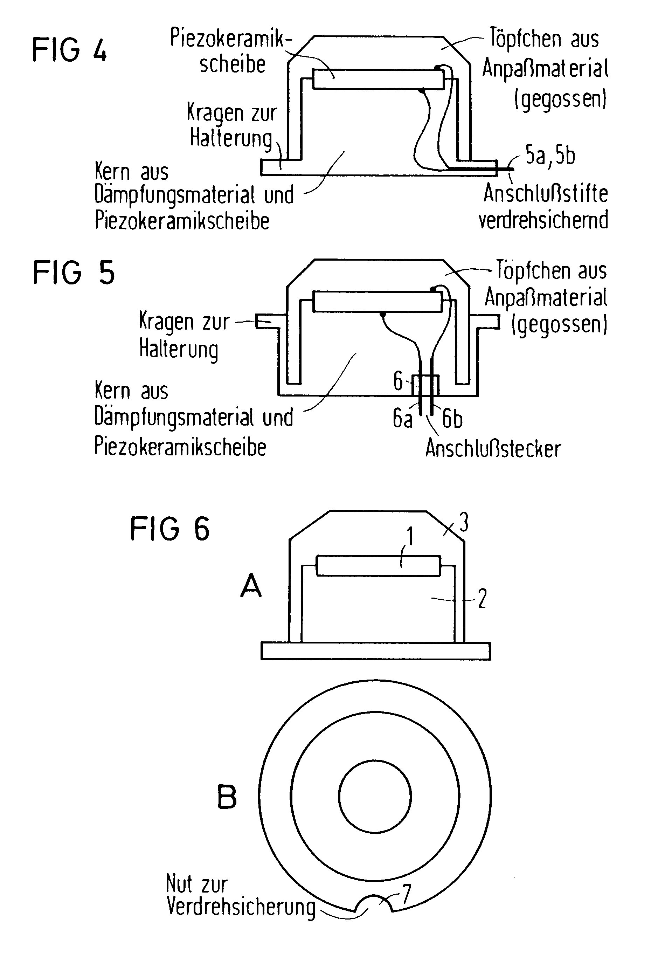

Die bereits erwähnten Anschlußleitungen 1 a, 1 b werden vorzugsweise durch Weichlötung mit Anschlußstiften 5 a, 5 b verbunden. Diese Anschlußstifte 5 a, 5 b werden derart in den Dämpfungskörper 2 eingeschlossen, daß sie vorzugsweise radial aus dem Kragen 2 a nach außen in verdrehsichernder Weise vorstehen, vergl. Fig. 4.

Gemäß einer anderen Ausführungsform der Erfindung können die Anschlußleitungen 1 a, 1 b, die vorzugsweise durch Weichlötung mit Anschlußsteckerstiften 6 a, 6 b verbunden sind, die von einem Anschlußsteckersockel 6 gehalten sind, verbunden. Der Anschlußsteckersockel wird beim Gießen des Dämpfungskörpers 2 derart in diesem eingeschlossen, daß die Anschlußsteckerstifte 6 a, 6 b parallel zu der Rotationsachse des Wandlerkerns 1/2 ausgerichtet sind und von deren der Piezokeramikscheibe 1 abgewandten Seite vorstehend in den Dämpfungskörper 2 integriert sind. Der Kragen 2 a ist vorzugsweise mit einer Nut 7 zur Verdrehsicherung ausgebildet, vergl. Fig. 5 und Fig. 6.

Gemäß einer weiteren Ausführungsform der Erfindung kann ein Schritt zur Ausbildung des Anpaß- und Montagekörpers 3 mit einer Ringnut 8 zur Aufnahme eines Gummirings 9 zum Haltern des Anpaß- und Montagekörpers 3 vorgesehen sein.

Der Anpaß- und Montagekörper 3 kann entweder als an einem seiner Enden geschlossener Hohlzylinder ausgebildet sein, es kann jedoch auch aus Montagegründen zweckmäßig sein, daß das den Hohlzylinder verschließende Ende kegelstumpfförmig ausgebildet ist.

Vorteilhafterweise kann gemäß einer weiteren Ausführungsform der Erfindung vorgesehen sein, daß der Kragen 2 a mit einer Sicke 10 zur Körperschallentkopplung und mit einem Randwulst 11 zur Halterung des Dämpfungskörpers 2 ausgebildet wird.

**Patentansprüche**

1. Verfahren zur Herstellung eines US-Wandlers, insbesondere zur Luft- und Gasdurchflußmessung, **gekennzeichnet durch** Schritte zum:
   - Gießen eines Wandlerkerns (1/2) aus einem gießbaren Dämpfungsmaterial (D) in einer Kern-Form (F1), wobei der Wandlerkern (1/2) aus einer an einer Seite eines Dämpfungskörpers (2) in ihrer Dikke teilweise freiliegenden Piezokeramikscheibe (1) und dem Dämpfungskörper (2), in den die Piezokeramikscheibe (1) teilweise mit nach außen führbaren Anschlußleitungen (1a, 1b) eingeschlossen ist, besteht, und
   - Umschließen des Wandlerkerns (1/2) mit einem gießbaren Anpaßmaterial (A) in einer zweiteiligen Form (F2/F3) zur Bildung eines Anpaß- und Montagekörpers (3).

2. Verfahren nach Anspruch 1, **dadurch gekennzeichnet,**
   - daß die mit nach außen führbaren Anschlußleitungen (1a, 1b) versehene Piezokeramikscheibe (1) zur Bildung des Wandlerkerns (1/2) in die Kern-Form (F1), die eine zur Aufnahme der Piezokeramikscheibe (1) bestimmte Ausnehmung (F11) aufweist, eingelegt wird,

- daß anschließend Dämpfungsmaterial (D) in die Kern-Form (F1) gegossen wird, wobei die Kern-Form (F1) derart ausgebildet ist, daß der Dämpfungskörper (2) an seiner der Piezokeramikscheibe (1) abgewandten Seite mit einem Kragen (2a) ausgebildet wird,

- daß der fertige, der Kern-Form (F1) entnommene Wandlerkern (1/2) mit seinem Kragen (2a) in eine Ausnehmung (F2a) eines ersten Formteils (F2) der Form (F2/F3) zur Bildung des Anpaß- und Montagekörpers (3) eingesetzt wird,

- daß in das erste Formteil (F2) ein zweites Formteil (F3) der Form (F2/F3) zur Bildung des Anpaß- und Montagekörpers (3) derart eingesetzt wird, daß der Kragen (2a) des Wandlerkerns (1/2) zumindest zum Teil einerseits von dem ersten Formteil (F2) und andererseits von dem zweiten Formteil (F3) eingeschlossen ist, und

- daß Anpaßmaterial (A) in die aus dem ersten Formteil (F2) und dem zweiten Formteil (F3) gebildete Form (F2/F3) zur Bildung des Anpaß- und Montagekörpers (3) gespritzt wird, um den Anpaß- und Montagekörper (3) zu bilden, der den Wandlerkern (1/2) bis auf einen freiliegenden Teil des Kragens (2a) vollständig umschließt.

3. Verfahren nach Anspruch 1, **dadurch gekennzeichnet,**

- daß die mit nach außen führbaren Anschlußleitungen (1a, 1b) versehene Piezokeramikscheibe (1) zur Bildung des Wandlerkerns (1/2) in die Kern-Form (F1), die eine zur Aufnahme der Piezokeramikscheibe (1) bestimmte Ausnehmung (F11) aufweist, eingelegt wird,

- daß anschließend Dämpfungsmaterial (D) in die Kern-Form (F1) gegossen wird, wobei die Kern-Form (F1) derart ausgebildet ist, daß der Dämpfungskörper (2) an seiner der Piezokeramikscheibe (1) abgewandten Seite mit einem Kragen (2a) ausgebildet wird,

- daß der fertige, der Kern-Form (F1) entnommene Wandlerkern (1/2) mit seinem Kragen (2a) in eine Ausnehmung (F2a) eines ersten Formteils (F2) der Form (F2/F3) zur Bildung des Anpaß- und Montagekörpers (3) eingesetzt wird,

- daß ein zweites Formteil (F3) der Form (F2/F3) zur Bildung des Anpaß- und Montagekörpers (3) mit nach oben weisender, den Wandlerkern aufnehmenden Öffnung (F3a) teilweise mit Anpaßmaterial (A) gefüllt wird und

- daß das erste Formteil (F2) mit dem nach unten zu der Öffnung (F3a) des zweiten Formteils (F3) weisenden Wandlerkern (1/2) in die Öffnung (F3a) des zweiten Formteils (F3) bis zum Eingriff der beiden Formteile (F2/F3) miteinander eingepreßt wird, so daß das in dem zweiten Formteil (F3) enthaltene Anpaßmaterial (A) verdrängt wird und um den eintauchenden Wandlerkern (1/2) herum zur Bildung des Anpaß- und Montagekörpers (3) aufsteigt.

4. Verfahren nach einem der vorhergehenden Ansprüche, **dadurch gekennzeichnet,** daß die Anschlußleitungen (1a, 1b) vorzugsweise durch Weichlötung mit Anschlußstiften (5a, 5b) verbunden werden und daß die Anschlußstifte (5a, 5b) derart in den Dämpfungskörper (2) bei diesen desselben eingeschlossen werden, daß sie vorzugsweise radial aus dem Kragen (2a) nach außen in verdrehsichernder Weise vorstehen.

5. Verfahren nach einem der Ansprüche 1 bis 3, **dadurch gekennzeichnet,** daß die Anschlußleitungen (1a, 1b) vorzugsweise durch Weichlötung mit Anschlußsteckerstiften (6a, 6b), verbunden werden, die von einem Anschlußsteckersockel (6) gehalten sind, daß der Anschlußsteckersockel beim Gießen des Dämpfungskörpers (2) derart in diesen eingeschlossen wird, daß die Anschlußsteckerstifte (6a, 6b) parallel zur der Rotationsachse des Wandlerkerns (1/2) und von der der Piezokeramikscheibe (1) abgewandten Seite vorstehend in den Dämpfungskörper (2) integriert sind, und daß der Kragen (2a) mit einer Nut (7) zur Verdrehsicherung ausgebildet wird.

6. Verfahren nach einem der vorhergehenden Ansprüche, **dadurch gekennzeichnet,** daß der Anpaß- und Montagekörper (3) mit einer Ringnut (8) zur Aufnahme eines Gummirings (9) zum Haltern des Anpaß- und Montagekörpers (3) ausgebildet wird.

7. Verfahren nach einem der vorhergehenden Ansprüche, **dadurch gekennzeichnet,** daß der Anpaß- und Montagekörper (3) als an einem seiner Enden geschlossener Hohlzylinder ausgebildet wird.

8. Verfahren nach einem der Ansprüche 1 bis 6,

**dadurch gekennzeichnet,** daß der Anpaß- und Montagekörper (3) als ein an seinem einen Ende geschlossener Hohlzylinder ausgebildet wird, wobei das den Hohlzylinder verschließende Ende kegelstumpfförmig ausgebildet ist.

9.  Verfahren nach einem der Ansprüche 1 bis 6, **dadurch gekennzeichnet,** daß der Kragen (2a) mit einer Dicke (10) zur Körperschallentkopplung und mit einem Randwulst (11) zur Halterung des Dämpfungskörpers (2) ausgebildet wird.

10. US-Wandler, insbesondere zur Luft- und Gasdurchflußmessung, **dadurch gekennzeichnet,** daß ein Wandlerkern (1/2) aus einem gießbaren Dämpfungsmaterial (D) vorgesehen ist, wobei der Wandlerkern (1/2) aus einer an einer Seite eines Dämpfungskörpers (2) in ihrer Dicke teilweise freiliegenden Piezokeramikscheibe (1) und dem Dämpfungskörper (2), in den die Piezokeramikscheibe (1) teilweise mit nach außen führbaren Anschlußleitungen (1a, 1b) eingeschlossen ist, besteht, und daß der Wandlerkern (1/2) mit einem gießbaren Anpaßmaterial (A) zur Bildung des Anpaß- und Montagekörpers (3) umgossen ist.

FIG 1

HERSTELLUNG DES
WANDLERKERNS

Anpaßmaterial
(gießbar)

FIG 2

A

F3

Form (Teil 1)

1

Kern, bestehend aus
Dämpfungsmaterial
und Piezokeramik
scheibe

F2a

F2

2

Form (Teil 2)

FIG 3

F2

F2a

F3a

F3

FIG 4

Piezokeramikscheibe

Töpfchen aus
Anpaßmaterial
(gegossen)

Kragen zur
Halterung

Kern aus
Dämpfungsmaterial und
Piezokeramikscheibe

5a,5b

Anschlußstifte
verdrehsichernd

FIG 5

Töpfchen aus
Anpaßmaterial
(gegossen)

Kragen zur
Halterung

Kern aus
Dämpfungsmaterial und
Piezokeramikscheibe

6

6a    6b

Anschlußstecker

FIG 6

A

1    3

2

B

7

Nut zur
Verdrehsicherung

FIG 7

Gummiring
zum Haltern

Piezokeramikscheibe

FIG 8

Töpfchen aus
Anpaßmaterial
(gegossen)

Kragen zur
Halterung

11

Kern aus
Dämpfungsmaterial und
Piezokeramikscheibe

10 Sicke zur Körperschallentkopplung

FIG 9

Dämpfungsmaterial
gießbar

Piezokeramik

Wandlerkern

Anpaßmaterial
gießbar

Form 1

Einspritz-
Öffnung

Form 2

Form 3

Ultraschallwandler
für Gaszähler

Kragen zur
Halterung

Anschlußstifte
verdrehsichernd

**Europäisches Patentamt**

# EUROPÄISCHER RECHERCHENBERICHT

Nummer der Anmeldung

**EP 91 11 4484**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 832 947 (SIEMENS)<br>* das ganze Dokument *<br>– – – | 1,6,7,10 | G 01 F 1/66<br>G 01 H 11/08<br>G 10 K 11/00 |
| A | EP-A-0 116 823 (SIEMENS)<br>* Ansprüche 1-3; Figur 1 *<br>– – – | 1-3 | G 01 F 1/32 |
| A | US-A-4 011 473 (F.MASSA)<br>* Spalte 2, Zeile 56 - Spalte 3, Zeile 50; Figuren 1-2 *<br>– – – | 1-3,5,7-9,<br>10 | |
| A | EP-A-0 324 187 (TDK)<br>* Seite 4, Zeile 55 - Seite 5, Zeile 49; Figur 1 *<br>– – – | 1,4,10 | |
| A | PATENT ABSTRACTS OF JAPAN vol. 8, no. 42<br>(P-256)(1479) 23 Februar 1984,<br>& JP-A-58 193475 (MATSUSHITA) 11 November 1983,<br>* das ganze Dokument *<br>– – – – – | 8 | |
| | | | **RECHERCHIERTE SACHGEBIETE (Int. Cl.5)**<br><br>G 01 F<br>G 01 H<br>G 01 L<br>G 10 K<br>H 01 L |

Der vorliegende Recherchenbericht wurde für alle Patentansprüche erstellt

| Recherchenort | Abschlußdatum der Recherche | Prüfer |
|---|---|---|
| Berlin | 05 Dezember 91 | MUNNIX S J G |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------
& : Mitglied der gleichen Patentfamilie, übereinstimmendes Dokument